# EUROPEAN PATENT APPLICATION

(11) **EP 0 729 211 A2**
(43) Date of publication of application: **28.08.1996**
(21) Application number: 96830017.8
(22) Date of filing: 17.01.1996
(51) Int. Cl.: H02J 7/02, H02J 9/06, B25F 5/00

(54) **A transportable power tool with twin power supply, in particular a saw, shear or similar tool**

(30) Priority: 24.02.1995 IT BO950069
(71) Applicant: COOPCOSTRUTTORI, Società Cooperativa a Responsabilità Limitata, I-44011 Argenta (Ferrara) (IT)
(72) Inventor: Marici, Antonino, I-44100 Ferrara (IT)
(74) Representative: Lanzoni, Luciano

(57) **Abstract**

The transportable power tool with twin power supply is of the type which includes an electric motor (2), a tool (3) powered by the electric motor (2) and a rechargeable battery (4), and can operate uninterruptedly even without the mains power supply, since the electric motor (2) is continuously and directly powered by the rechargeable battery (4), whether the power tool (1) is connected up to the mains or not, and the rechargeable battery (4) is powered and driven by an electronic circuit consisting substantially of a battery-charger circuit (6) with input connected to the mains (7) and output connected to the rechargeable battery (4), the latter supplying a power circuit (8) with output connected to the input of the electric motor (2) and driven by an operational control circuit (9) which is programmed to gradually supply power to the electric motor (2) when it is started and to reverse motor energising at the moment in which it stops, so that it acts as a brake and as a generator which supplies power to the rechargeable battery (4), compensating at least the start-up power absorbed by the electric motor (2).

## Description

The present invention relates to a transportable power tool with twin power supply, in particular a saw, shear or similar tool. More specifically, the present invention relates to those heavy duty professional power tools which must even operate for an entire day.

Such power tools are driven by an electric motor and can be used in a fixed working position, or are transportable. This differentiation is important, since power tools for fixed positions may be heavier, larger and have a greater operating capacity than transportable power tools and can be powered directly from the mains. In contrast, transportable power tools are smaller, have a reduced operating capacity, since their weight must, obviously, be limited to allow for their transportation.

However, in terms of operation, transportable tools are required with professional operating features which can be compared to those of power tools with a fixed working position. The latter allows the use of the power tool directly in its own pre-established position, without necessitating its continuous shifting to the place where the workpiece machined must be fitted.

As is known, some power tools currently used are battery-operated, so that the immediate availability of a mains socket is not necessary, although they are unable to operate for an extended period of time, e.g.: an entire working day. To eliminate this disadvantage, power tools have numerous batteries which are recharged as they are used.

The European Patent Application No. 24.268 discloses a small power tool with twin power supply (direct and alternating current), fitted with a switch which allows use of the mains power supply and battery recharging, or only battery operation. However, this power tool cannot be used for professional purposes, since its operating features vary, depending on whether it is powered from the mains or by the battery.

The aim of the present invention is to provide a professional power tool which can be powered both from the mains and from a battery, and which has the same operating features, regardless of the type of power supply used.

A further aim of the present invention is to produce a professional power tool with twin power supply which can be battery-operated at least for an entire working day.

Another aim of the present invention is to produce a professional power tool which is sufficiently economical from a construction viewpoint, and recyclable from an environmental viewpoint. The technical features of the present invention, in accordance with the aforesaid aims, are clearly illustrated in the claims herein, and the advantages of the said features are more clearly described in the detailed description below, with reference to the accompanying drawings, which illustrate an embodiment by way of example only, and in which:
- figure 1 is a block wiring diagram of the power tool disclosed;
- figure 2 is a side view of the power tool disclosed;
- figure 3 is a front view of the power tool shown in fig. 2.

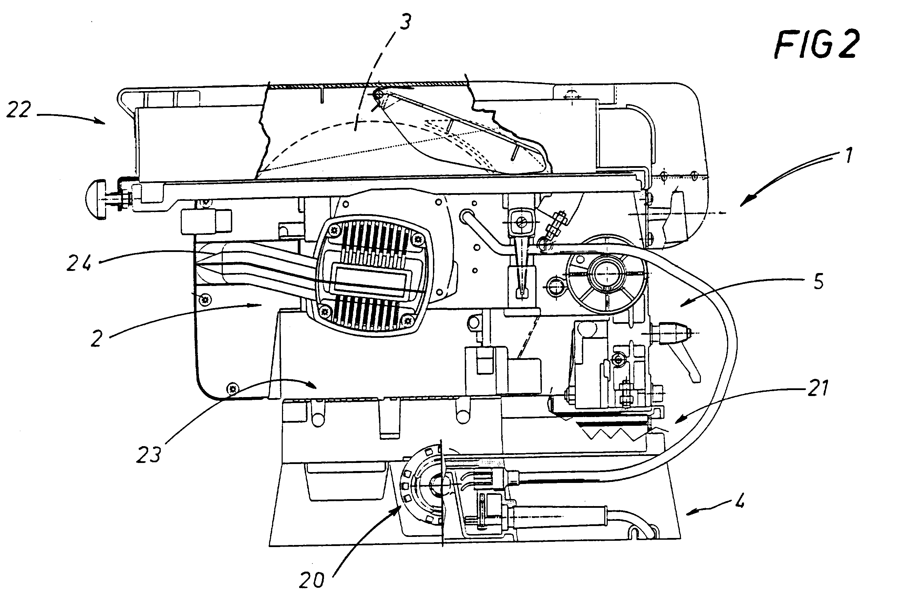

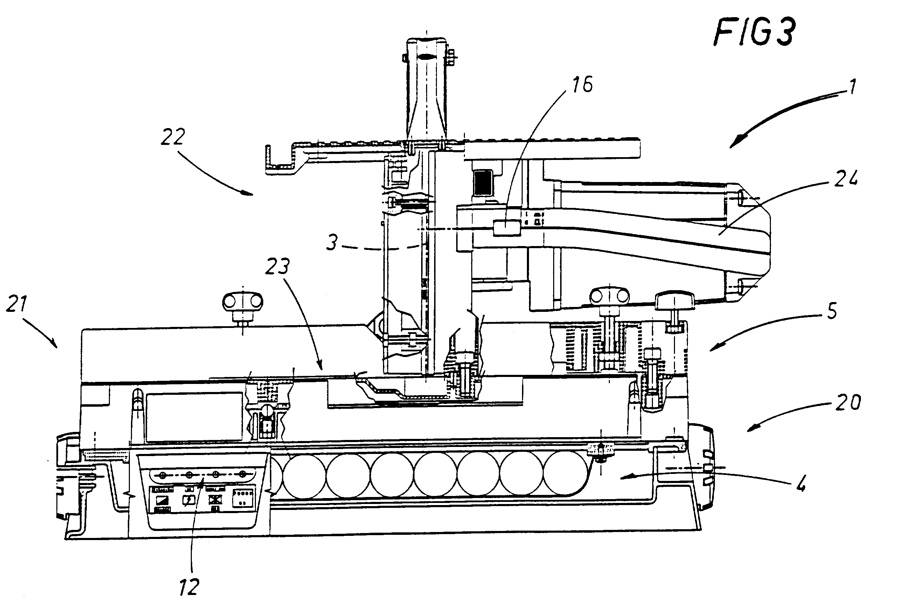

With reference to the accompanying drawings, and in particular figures 2 and 3, the disclosed transportable power tool with twin power supply, in particular a saw or shear or similar tool, is indicated as a whole by the numeral 1 and is of the type which includes an electric motor 2, a tool 3 driven by the electric motor 2 and a battery pack or rechargeable battery 4, all supported by a support frame 5. The tool 3 is driven by the electric motor 2 when the latter is in its active power phase, said phase being understood as the phase in which the electric motor 2 acts as an element which supplies power to the tool 3 which, therefore, receives the power supplied. Figures 2 and 3 are simplified illustrations of a shear, although the following description obviously applies to all types of power tools. The support frame 5 consists of a fixed base 21 and a mobile frame 22. The base 21 is fixed in the sense that it is intended to be rested on a support surface and is removed only when the entire power tool 1 is moved. The said base 21 defines a table 23 which supports the workpieces to be machined. The frame 22 is supported by the base 21, to which it is joined about a horizontal axis, and supports the electric motor 2 and the tool 3. The frame 22 has a handle 24 for the manual control of frame 22 rotation during workpiece cutting.

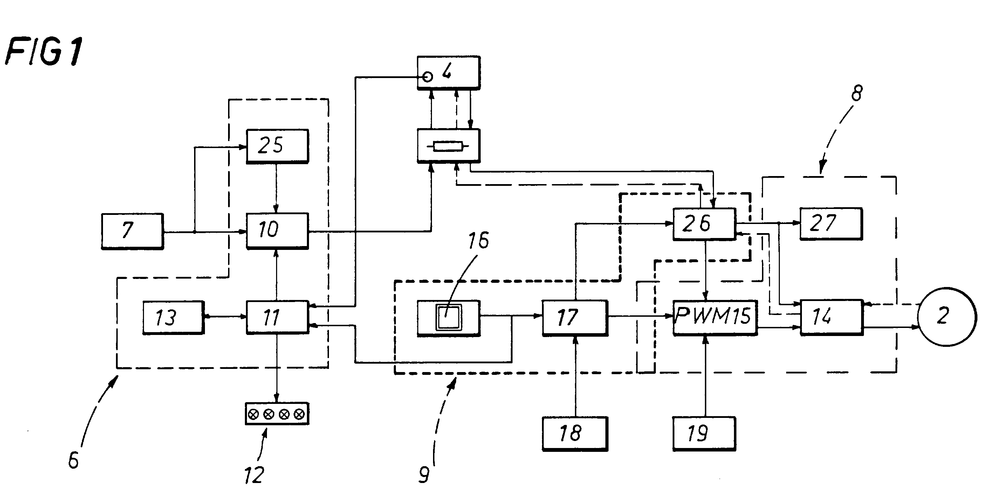

With reference to figure 1, the electric motor 2 is powered directly and continuously by the rechargeable battery 4, regardless of whether the power tool 1, as a whole, is connected up to the mains or not. This means that the electric motor 2 is powered by the rechargeable battery 4 even when the power tool 1 is connected to the mains 7. The rechargeable battery 4 is powered and driven by an electronic circuit consisting substantially of a battery-charger circuit 6 with input connected to the mains 7 and output connected to the battery 4. The battery 4, in turn, powers a power circuit 8 with output connected to the input of the electric motor 2.

The power circuit 8 is driven by an operational control circuit 9, which is programmed to run the electric motor 2 in two distinct modes, depending on whether said motor is started or stopped. The operational circuit 9 acts upon the power circuit 8, to gradually supply power to the electric motor 2 when the latter is started, thus reducing the high level of current absorption which would occur at start-up with, for example, a stepped power supply, and so also increasing operator safety. In contrast, when the electric motor 2 must be stopped, the operational circuit 9 energises the electric motor 2 so that it operates in reverse-current, that is to say, as a brake or generator. This allows a reduction in the electric motor 2 stopping time and, at the same time, the generation of a quantity of electrical power which partially charges the battery 4. The said recovered electrical power is certainly not comparable to that absorbed during cutting, but may, approximately and with the type of control effected at start-up, be compared to that absorbed by the electric motor 2 at start-up. Such power saving is not significant when the power tool 1 is connected to the mains 7, but becomes fundamental when the power tool 1, for example on a work site, is operated exclusively on battery 4 power.

In order to obtain top power tool 1 performance, the electric motor 2 used is a high torque, high efficiency direct current electric motor with permanent magnets.

Closer observation of the block wiring diagram for the power tool in figure 1 reveals that the battery-charger circuit 6 includes a power converter 10 with input connected to the mains 7 and output connected to the battery 4, a data processing unit 11 and status indicators 12. The data processing unit 11 is powered by the battery 4, the unit input being connected to an output of the operational circuit 9, and the unit output being connected to a control input of the power converter 10. The power converter is controlled by the data processing unit 11, in the sense that it is the data processing unit 11 which causes the power converter 10 to power the battery 4. The battery-charger circuit 6 also includes a battery-charger logic power circuit 25 which is always switched on when the power tool 1 is connected to the mains 7 and powers the circuit which controls the battery 4 and powers the latter through the power converter 10. The power converter 10 powers the battery 4 according to the data received from the data processing unit 11, data which is also transmitted to the status indicators 12 which consist, for example, of a plurality of warning lights or LEDs positioned in a zone clearly visible to the operator. Moreover, the data processing unit 11 interacts with a data storage unit 13 which is part of the battery-charger circuit 6 and has sufficient capacity to store the data necessary to establish battery 4 status, that is to say, to establish whether the battery 4 is still valid or is getting low.

The power circuit 8 includes a power stage 14, with input connected to the battery 4 and output connected to the electric motor 2. The power stage 14, for example a chopper, is driven by a PWM drive circuit 15 which is, in turn, driven by the operational circuit 9. At the command of the operational circuit 9, the PWM drive circuit 15 can make the power stage 14 assume two different configurations in which it controls the electric motor 2 in "motor" mode or in "generator" mode. The PWM drive circuit 15 and power circuit or stage 14 are two circuits able to drive, and therefore regulate, the various operating phases of the electric motor 2, and to regulate its braking phase - corresponding to the electric motor 2 generator configuration. The electric motor 2 braking phase is also an active power phase, but in this case, the motor 2 does not supply power to the tool 3. The power stage 14 is powered by the battery 4 through a line contactor 26 which also powers a drive logic power circuit 27. The drive logic power circuit 27 output is connected to an input of the power stage 14, said circuit is always live and is similar to the battery-charger logic power circuit 25. The battery-charger logic power circuit 25 and drive logic power circuit 27 are independent units which neither contribute to the battery 4 power supply, nor to the electric motor 2 power supply, being intelligent logic circuits ("cards") used respectively by the converter 10 and the power stage 14 to control their own functions.

Another basic circuit is the operational circuit 9, which includes a pushbutton switch 16 and control circuit 17 that may assume two different operating configurations: acceleration and braking. The pushbutton switch 16 output is connected to both the control circuit 17 and the data processing unit 11. The control circuit 17 output is connected to both the line contactor 26, which may be part of the power circuit 8 or the operational circuit 9, and to the PWM drive circuit 15. The control circuit 17 is controlled by the pushbutton switch 16, being sensitive to changes in the latter's status, that is to say, to the pushbutton switch 16 MAKE/BREAK circuit states. The control circuit 17, therefore, assumes the acceleration configuration when the pushbutton switch 16 is in the make-circuit position, and the braking configuration when the pushbutton switch 16 is in the break-circuit position.

The power tool 1 electrical circuit also includes charge detector means 18 with output connected to a safety input of the control circuit 17, and overcurrent detector means 19 with output connected to a safety input of the PWM drive circuit 15. Both types of means inhibit operation of the electric motor 2 if the battery 4 charge detected is insufficient or if there is an absorption overcurrent by the electric motor 2.

From a structural viewpoint, the battery 4 can be fixed to the support frame 5, and in particular to the base 21, using rapid connecting means 20 as illustrated in figures 2 and 3. The electrical circuit in figure 1 is an integral part of the battery 4, with the exception of the pushbutton switch 16, which is attached to the handle 24. The materials used are recyclable and ecological as far as possible.

As regards the operation of the power tool 1, the electric motor 2 starts when the pushbutton switch 16 is pressed. The change in the status of the pushbutton switch 16 is detected by the control circuit 17 and the data processing unit 11. The control circuit 17 assumes the acceleration configuration and acts upon the line contactor 26 to power the electric motor 2, and on the PWM drive circuit 15 to regulate the power supply to the electric motor 2, so that it is supplied with power gradually rather than suddenly. In this way, the electric motor 2, which moves to an active power phase in which it supplies power to the tool 3, takes longer to reach its running speed, but does so with a greater degree of safety. Upon completion of the various sub-phases involving the tool 3 approach to the workpiece to be cut, the actual cutting of the workpiece, and the distancing of the tool 3 from the workpiece cut, the pushbutton switch 16 is released to stop the electric motor 2. The change in the status of the pushbutton switch 16 is detected by the control circuit 17, which changes to the braking configuration, thus acting upon the power stage 14 by means of the PWM drive circuit 15, so that the electric motor 2 operates in reverse-current and reaches an active power phase in which it does not supply power to the tool 3. From the moment in which the electric motor 2 is no longer supplied with power to the moment in which it stops a given period of time elapses, since the motor and the tool 3 have accumulated a given amount of kinetic energy, which must be discharged before they stop. When the electric motor 2 is made to operate in reverse-current, it operates as a generator, and so as a brake, to absorb the kinetic energy accumulated, yet the said kinetic energy is transformed into electrical power which is supplied to the battery 4, to which the electric motor 2 is always connected. This electrical power is not sufficient to recharge the battery 4, compensating the power supplied to the electric motor 2 during cutting, but is sufficient to compensate the starting power absorbed by the electric motor 2. During the various cutting sub-phases, the power absorbed by the electric motor 2 varies within given values, depending on the working conditions, that is to say, the load. The rpm of the electric motor 2 is maintained constant by the power stage 14, which powers the electric motor 2 in an intelligent fashion and receives power exclusively from the battery 4. When the power tool 1 is not connected to the mains 7, the amount of battery 4 power consumed depends on its use. When, in contrast, the power tool 1 is connected to the mains 7, the power converter 10 supplies the battery 4 with power with constant values and current, regardless of the power absorbed by the electric motor 2. This means that even if the electric motor 2 absorbs more power than is envisaged, the power converter 10 continues to supply the battery 4, always under identical conditions. It should be noticed that this type of power supply allows the simplification of the entire circuit, since automatic direct or feed-back controls would be indispensable if the battery 4 were to be powered depending on the electric motor 2 absorption. Upon completion of each cutting phase, when the power tool 1 is connected to the mains 7, the battery-charger circuit 6 recharges the battery 4 and compensates the extra power absorbed by the electric motor 2 during the period of greatest load.

The fact that the electric motor 2 is used as a generator and brake allows two advantages, the first being that the battery 4 is partially recharged. The second advantage being that it is possible to avoid a situation in which the battery 4 continually powers the electric motor 2. It is, in fact, known that this interruption in the power supply condition means that the charge is longer-lasting, even in the absence of recharging operations.

The fact that a reduction in the electric motor 2 stopping time is envisaged improves operator safety, said safety also improved by envisaging a more gradual electric motor 2 start.

The charge detector means 18 are a valid form of protection for the battery 4, and further improve operator safety. When the battery 4 is not sufficiently charged, continued operation would be dangerous, since the battery 4 could be damaged. Moreover, if the tool 3 were unable to complete the cutting phase due to the insufficient power supplied to the electric motor 2, the tool 3 could lock and eject the workpiece to be cut, thus endangering the operator.

A further advantage of the power tool 1 according to the present invention is the possibility of uninterrupted operation even if the mains 7 power is interrupted, since the tool is constantly powered by the battery 4.

The present invention, thus designed for the said objects, may be subject to numerous variations, all encompassed by the original design concept, and all components may be replaced with technically equivalent parts.

## Claims

1. A transportable power tool with twin power supply, in particular a saw, shear or similar tool, of the type which includes an electric motor (2), a tool (3) driven by the said electric motor (2) as the element which receives the power supply during the motor's active power phase, and a battery pack or rechargeable battery (4), all supported by a support frame (5), characterised in that during the said active power phase the electric motor (2) is continually and directly powered by the rechargeable battery (4) regardless of whether the power tool (1) is connected to the mains or not; the rechargeable battery (4) being able to receive power from and being driven by an electronic circuit consisting substantially of a battery-charger circuit (6) with input connected to the mains (7) and output connected to the rechargeable battery (4); the latter powering a power circuit (8) with output connected to the input of the electric motor (2) and driven by an operational control circuit (9) which is programmed to reverse energising of the said motor at the end of the said active power phase, so that the motor functions as a brake and generator, designed to supply power to the rechargeable battery (4), compensating at least the start-up energy absorbed by the electric motor (2) at the start of the said active phase.

2. The power tool as described in claim 1, characterised in that the electric motor (2) is a high torque, direct current electric motor with permanent magnets.

3. The power tool as described in claim 1, characterised in that the battery-charger circuit (6) includes a power converter (10), with input connected to the mains (7) and output connected to the rechargeable battery (4), a data processing unit (11) powered by the rechargeable battery (4) with input connected to a control input of the power converter (10), and status indicator means (12); the said data processing unit (11) interacting with a data storage unit (13) which is part of the battery-charger circuit (6), having sufficient capacity to store the data necessary to establish the status of the rechargeable battery (4); said power converter (10) supplying electrical power to the rechargeable battery (4) with constant power and current values, regardless of the electric motor (2) absorption conditions.

4. The power tool as described in claim 1, characterised in that the power circuit (8) includes a power stage (14) with input connected to the rechargeable battery (4) and output connected to the electric motor (2), driven by a PWM drive circuit (15) which is, in turn, driven by an operational control circuit (9); said PWM drive circuit (15), at a command from the operational control circuit (9), being able to assume two different configurations, in which it energises the electric motor (2) with opposite polarities, so that it operates as a motor or, respectively, as a brake and generator during the starting and operating phases, or during the electric motor (2) stopping phase; said PWM drive circuit (15) being structured in such a way that it powers the electric motor (2) gradually at start-up.

5. The power tool as described in claim 4, characterised in that the operational control circuit (9) includes a manually operated pushbutton switch (16) for switching the said power tool (1) ON and OFF and a control circuit (17) with input connected to the said pushbutton switch (16) and output connected to a control input of the PWM drive circuit (15); said control circuit (17) being able to assume two different configurations when the pushbutton switch (16) is set to the make-circuit or break-circuit positions, at which point it acts upon the PWM drive circuit (15), causing it to assume its different configurations corresponding to the said electric motor (2) starting and operating and, respectively, stopping phases.

6. The power tool as described in claim 1, characterised in that the rechargeable battery (4) is connected to an input of the charge detector means (18), said means' output being connected to an input of the operational control circuit (9), to inhibit operation of the electric motor (2) if the charge status of the rechargeable battery (4) is below a minimum safety value which may be preset.

7. The power tool as described in claim 1, characterised in that the power circuit (8) is connected to overcurrent detector means (19) with which it interacts to inhibit electric motor (2) operation if the value of electric current absorbed by the electric motor is above a maximum value which may be preset.

8. The power tool as described in claim 1, characterised in that the battery-charger circuit (6) is an integral part of the rechargeable battery (4), which can be fixed to the support frame (5) using rapid connecting means (20).

9. The power tool as described in claim 1, characterised in that the electric motor (2) and rechargeable battery (4) operate at 24 V.

10. The power tool as described in claim 1, characterised in that at least the battery-charger circuit (6) and power circuit (8) are incorporated in the rechargeable battery (4).

11. The power tool as described in claim 1, characterised in that the support frame (5) is made of recyclable, ecological material.
